# EUROPEAN PATENT APPLICATION

(11) **EP 4 819 307 A1**
(43) Date of publication of application: **07.10.2026**
(21) Application number: 24897060.0
(22) Date of filing: 26.09.2024
(51) Int. Cl.: H01M 10/658, H01M 10/613, H01M 50/204, H01M 50/342

(54) **BATTERY PACK**

(30) Priority: 29.11.2023 JP 2023201991
(71) Applicant: IBIDEN CO., LTD., Ogaki-shi, Gifu 503-8604 (JP)
(72) Inventor: TOJO, Akinori, Ibi-gun, Gifu 501-0695 (JP); ANDO, Hisashi, Ibi-gun, Gifu 501-0695 (JP)
(74) Representative: Hoefer & Partner Patentanwälte mbB
(86) International application number: PCT/JP2024/034409
(87) International publication number: WO 2025/115370

(57) **Abstract**

Provided is a battery pack capable of preventing a chain of thermal runaway due to high-temperature gas generated during thermal runaway from an abnormal battery cell. The battery pack of the present invention includes: a module including a plurality of battery cells each provided with a safety valve; a case housing the module; and a heat insulating material provided between the module and the case, wherein the heat insulating material includes a first heat insulating sheet, the first heat insulating sheet includes a plurality of openings extending through the first heat insulating sheet, each of the plurality of openings is provided with one or more covering pieces that cover at least part of the opening, the one or more covering pieces are bonded to the first heat insulating sheet by an adhesive, and each of the openings is positioned to overlap at least part of a corresponding one of the safety valves in a transparent plan view of the first heat insulating sheet.

## Description

### TECHNICAL FIELD

The present invention relates to battery packs.

### BACKGROUND ART

A battery pack including a module with a plurality of battery cells and a case containing the module may generate high-temperature gas or flame in the event of thermal runaway. Such gas or flame may spread to the surroundings, potentially inducing further thermal runaway.

For the purpose of preventing a chain of thermal runaway, battery packs have conventionally included a safety valve in the module to release high-temperature gas generated during thermal runaway.

Also, when high-temperature gas discharged via the safety valve directly impinges on the case, the temperature of the case may increase, causing the heat of the case to influence the surroundings.

Thus, for the purpose of preventing high-temperature gas from directly impinging on the case, battery packs have conventionally included a heat insulating material between the module and the case.

An example of such a battery pack is the power storage device disclosed in Patent Literature 1. The power storage device includes a power storage stack including a plurality of power storage cells each provided with an exhaust valve on an upper surface, an upper case that covers the power storage stack from an upper side, and a first heat-resistant sheet and a second heat-resistant sheet that have heat resistance against exhaust gas exhausted from the exhaust valves and are provided between the upper case and the power storage stack, wherein the first heat-resistant sheet is provided with a plurality of holes at positions overlapping the exhaust valves in a vertical direction, and the second heat-resistant sheet is provided above the first heat-resistant sheet so as to cover the plurality of holes.

### CITATION LIST

### - Patent Literature

Patent Literature 1: JP 2023-59480 A

### SUMMARY OF INVENTION

### - Technical Problem

In the power storage device (battery pack) disclosed in Patent Literature 1, during thermal runaway, high-temperature gas discharged from an abnormal battery cell via an exhaust valve is blown upward through a hole in the first heat-resistant sheet toward the second heat-resistant sheet, thereby pushing the second heat-resistant sheet upward. As a result, the second heat-resistant sheet separates from the first heat-resistant sheet, and a gas flow path is formed between the first heat-resistant sheet and the second heat-resistant sheet. The gas is blocked by the second heat-resistant sheet and is therefore prevented from blowing against the upper case, so that damage to the upper case can be suppressed. In addition, the first heat-resistant sheet suppresses contact between the gas blocked by the second heat-resistant sheet and an adjacent cell, thereby suppressing an increase in temperature of the adjacent cell.

However, in the power storage device (battery pack) disclosed in Patent Literature 1, since the high-temperature gas is blocked by the second heat-resistant sheet, the high-temperature gas may flow backward through another hole in the first heat-resistant sheet and enter a normal cell adjacent to the abnormal battery cell via an exhaust valve. When the high-temperature gas flows backward, the normal cell may undergo thermal runaway.

In other words, the power storage device (battery pack) disclosed in Patent Literature 1 cannot sufficiently prevent a chain of thermal runaway.

The present invention has been made to solve the above problem and aims to provide a battery pack capable of preventing a chain of thermal runaway due to high-temperature gas generated during thermal runaway from an abnormal battery cell.

### - Solution to Problem

The battery pack of the present invention includes: a module including a plurality of battery cells each provided with a safety valve; a case housing the module; and a heat insulating material provided between the module and the case, wherein the heat insulating material includes a first heat insulating sheet, the first heat insulating sheet includes a plurality of openings extending through the first heat insulating sheet, each of the plurality of openings is provided with one or more covering pieces that cover at least part of the opening, the one or more covering pieces are bonded to the first heat insulating sheet by an adhesive, and each of the openings is positioned to overlap at least part of a corresponding one of the safety valves in a transparent plan view of the first heat insulating sheet.

The battery pack of the present invention can prevent a chain of thermal runaway due to high-temperature gas generated during thermal runaway from an abnormal battery cell. The principle thereof will be described below.

In the battery pack of the present invention, the module includes safety valves. Accordingly, when a battery cell undergoes thermal runaway and high-temperature gas is generated, the gas is discharged via a safety valve. The gas discharged via the safety valve reaches a heat insulating material.

The heat insulating material includes a first heat insulating sheet, and the first heat insulating sheet includes openings extending through the first heat insulating sheet.

Furthermore, each of the openings is positioned to overlap at least part of a corresponding one of the safety valve in a transparent plan view of the first heat insulating sheet.

Therefore, the gas discharged via the safety valve reaches a vicinity of the opening in the first heat insulating sheet.

Each opening is provided with one or more covering pieces that cover at least part of the opening, and the one or more covering pieces are bonded to the first heat insulating sheet by an adhesive.

The gas reaching the vicinity of the opening in the first heat insulating sheet is at a high temperature and thermally decomposes the adhesive bonding the covering pieces, thereby weakening the bonding between the covering pieces and the first heat insulating sheet.

Furthermore, gas pressure is applied to the covering pieces from the module side toward the case side.

As a result, the covering pieces are peeled off from the first heat insulating sheet.

Then, the gas passes through the opening in the first heat insulating sheet and is discharged into a space between the heat insulating material and the case.

In this process, the high-temperature gas decreases in temperature, and the gas pressure also decreases. Therefore, even when the gas discharged through the opening comes into contact with the case, the case is less likely to undergo a temperature increase due to the gas and is less likely to be damaged.

Furthermore, the gas discharged through the opening in the first heat insulating sheet is diffused between the heat insulating material and the case and also reaches other openings in the first heat insulating sheet.

However, since the other openings in the first heat insulating sheet are provided, inside the openings, with one or more covering pieces, even when the gas reaches the other openings in the first heat insulating sheet, the gas can be prevented from flowing backward to the module side through the other openings in the first heat insulating sheet.

By such a principle, in the present invention, high-temperature gas generated during thermal runaway from an abnormal battery cell can be prevented from reaching other battery cells. Accordingly, a chain of thermal runaway can be prevented.

In the battery pack of the present invention, each of the plurality of openings is preferably provided, inside the opening, with at least one covering piece, and each of the plurality of openings is preferably provided, inside the opening, with a plurality of covering pieces.

Covering pieces are easily peeled off from the first heat insulating sheet when provided inside the openings.

In the battery pack of the present invention, each of the plurality of openings is preferably provided, inside the opening, with a plurality of covering pieces.

In order to prevent backflow of high-temperature gas from the case side, no gap is preferably present between the openings and the covering pieces.

When the covering pieces are provided inside the openings so that no gap is formed between the openings and the covering pieces, the provision of a plurality of covering pieces results in a smaller size of each covering piece than when providing a monolithic covering piece.

When a monolithic covering piece is provided in an opening and is peeled off by gas from the module side, the monolithic covering piece, which is large, may block the flow of the gas and inhibit diffusion of the gas.

On the other hand, when a plurality of covering pieces are provided in an opening and are peeled off by gas from the module side, each covering piece, which is small, is less likely to inhibit diffusion of the gas.

In the battery pack of the present invention, at least some of the plurality of covering pieces are preferably arranged to be in contact with each other. In such a case, a portion where the covering pieces are arranged to be in contact with each other is preferably formed in a straight-line shape.

Furthermore, in the battery pack of the present invention, at least part of the covering pieces is preferably arranged to be in contact with the outline of the opening.

Such a provision of the covering pieces facilitates prevention of backflow of gas through gaps between the covering pieces or through gaps between the covering pieces and the opening.

In the battery pack of the present invention, the covering pieces are preferably arranged to cover the outline of the opening from the case side.

Such a provision of the covering pieces prevents formation of a gap between the covering pieces and the opening, thereby facilitating prevention of backflow of gas between the covering pieces and the opening.

In the battery pack of the present invention, the openings preferably have plan view shapes of at least one type selected from the group consisting of a triangle, a quadrangle, a hexagon, a circle, an ellipse, and a racetrack.

Openings having such shapes can be easily formed.

In the battery pack of the present invention, the first heat insulating sheet may be a mica sheet or may be a heat-resistant resin sheet.

These materials are suitable as the first heat insulating sheet.

In the battery pack of the present invention, the covering pieces are preferably made of the same material as the first heat insulating sheet.

When a monolithic sheet is punched out to form openings, the first heat insulating sheet and the covering pieces can be produced simultaneously.

In the battery pack of the present invention, the adhesive preferably includes an organic adhesive.

The adhesive including an organic adhesive is more likely to be thermally decomposed when high-temperature gas from an abnormal battery cell reaches the covering pieces.

Accordingly, the covering pieces are more easily peeled off from the first heat insulating sheet.

In the battery pack of the present invention, the heat insulating material may further include a second heat insulating sheet, and
the second heat insulating sheet may be laminated on the first heat insulating sheet to cover the openings from the case side.

Such a battery pack is arranged such that the first heat insulating sheet is positioned on the lower side in the vertical direction and the second heat insulating sheet is positioned on the upper side in the vertical direction.

In the battery pack configured in such a manner, since the safety valves are positioned on the upper side in the vertical direction, high-temperature gas from an abnormal battery cell is discharged toward the upper side in the vertical direction.

Furthermore, the gas passes through the openings formed in the first heat insulating sheet and reaches the second heat insulating sheet.

The gas is blocked by the second heat insulating sheet. As a result, contact between the gas and the case can be prevented.

Moreover, the second heat insulating sheet is pushed upward by the gas and thereby separated from the first heat insulating sheet. Accordingly, the gas is diffused through a gap formed between the second heat insulating sheet and the first heat insulating sheet. Then, the temperature and pressure of the gas decrease.

In the battery pack of the present invention, the case may include a housing member including a bottom portion and a side wall portion, and a lid member covering the housing member, and the safety valves may be positioned on the bottom portion side or the lid member side.

From a fail-safe viewpoint, the battery pack of the present invention may be arranged such that the safety valves are positioned on the upper side in the vertical direction or on the lower side in the vertical direction.

Since the battery pack is often arranged such that the bottom portion or the lid member of the case is positioned on the lower side, positioning the safety valves on the bottom portion side or the lid member side facilitates positioning the safety valves on the upper side in the vertical direction or on the lower side in the vertical direction.

### - Advantageous Effects of Invention

The present invention can provide a battery pack capable of preventing a chain of thermal runaway due to high-temperature gas generated during thermal runaway from an abnormal battery cell.

### BRIEF DESCRIPTION OF DRAWINGS

FIG. 1A is a schematic perspective view of an example of a battery pack according to a first embodiment of the present invention.
FIG. 1B is a cross-sectional view taken along line A-A in FIG. 1A.
FIG. 1C is an exploded view of the battery pack illustrated in FIG. 1A.
FIG. 2A is a schematic cross-sectional view of an example of one safety valve and a vicinity thereof in the battery pack according to the first embodiment of the present invention.
FIG. 2B is a plan view of the safety valve illustrated in FIG. 2A as viewed from the heat insulating material side.
FIG. 3A is an explanatory view sequentially illustrating a principle by which a chain of thermal runaway is prevented when one battery cell undergoes thermal runaway in the battery pack according to the first embodiment of the present invention.
FIG. 3B is an explanatory view sequentially illustrating the principle by which a chain of thermal runaway is prevented when one battery cell undergoes thermal runaway in the battery pack according to the first embodiment of the present invention.
FIG. 3C is an explanatory view sequentially illustrating the principle by which a chain of thermal runaway is prevented when one battery cell undergoes thermal runaway in the battery pack according to the first embodiment of the present invention.
FIG. 4A is a schematic plan view of an example of other shapes of mica pieces in the battery pack according to the first embodiment of the present invention.
FIG. 4B is a schematic plan view of an example of other shapes of mica pieces in the battery pack according to the first embodiment of the present invention.
FIG. 4C is a schematic plan view of an example of other shapes of mica pieces in the battery pack according to the first embodiment of the present invention.
FIG. 4D is a schematic plan view of an example of other shapes of mica pieces in the battery pack according to the first embodiment of the present invention.
FIG. 4E is a schematic plan view of an example of other shapes of mica pieces in the battery pack according to the first embodiment of the present invention.
FIG. 4F is a schematic plan view of an example of other shapes of mica pieces in the battery pack according to the first embodiment of the present invention.
FIG. 5A is an enlarged schematic cross-sectional view of an example of a cross-section of a heat insulating material provided in a battery pack according to a second embodiment of the present invention.
FIG. 5B is an enlarged schematic cross-sectional view of another example of a cross-section of a heat insulating material provided in the battery pack according to the second embodiment of the present invention.
FIG. 6 is an enlarged schematic cross-sectional view of an example of a battery pack according to a third embodiment of the present invention.
FIG. 7A is an explanatory view sequentially illustrating a principle by which a chain of thermal runaway is prevented when one battery cell undergoes thermal runaway in the battery pack according to the third embodiment of the present invention.
FIG. 7B is an explanatory view sequentially illustrating the principle by which a chain of thermal runaway is prevented when one battery cell undergoes thermal runaway in the battery pack according to the third embodiment of the present invention.
FIG. 7C is an explanatory view sequentially illustrating the principle by which a chain of thermal runaway is prevented when one battery cell undergoes thermal runaway in the battery pack according to the third embodiment of the present invention.

### DESCRIPTION OF EMBODIMENTS

The battery pack of the present invention will be described in detail below. However, the present invention is not limited to the configurations described below, and can be appropriately applied through modification without departing from the gist of the present invention. Combinations of two or more preferred embodiments of the present invention described below are also included in the present invention.

### (First embodiment)

A battery pack according to a first embodiment of the present invention will be described, in which a first heat insulating sheet and covering pieces that constitute a heat insulating material are a mica sheet and mica pieces, respectively.

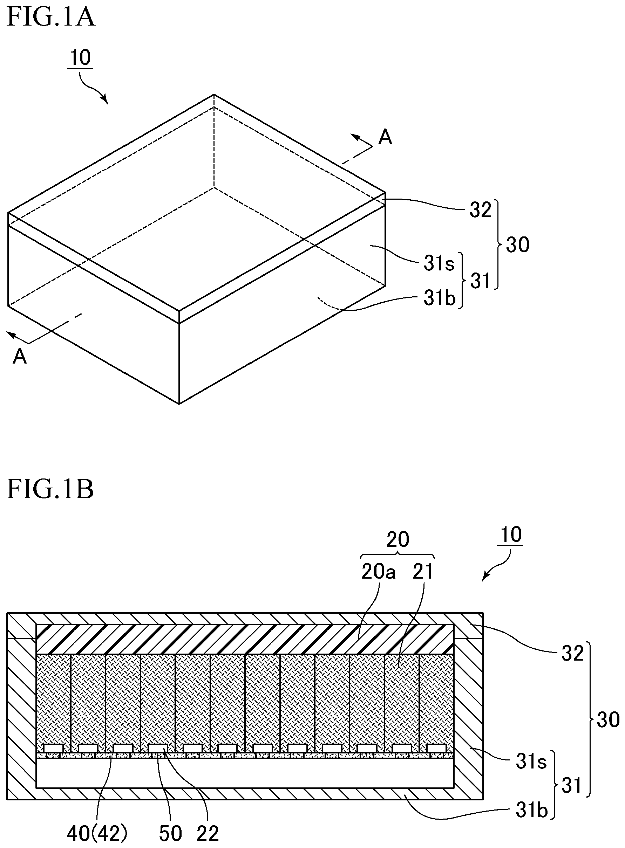

FIG. 1A is a schematic perspective view of an example of a battery pack according to a first embodiment of the present invention.

FIG. 1B is a cross-sectional view taken along line A-A in FIG. 1A.

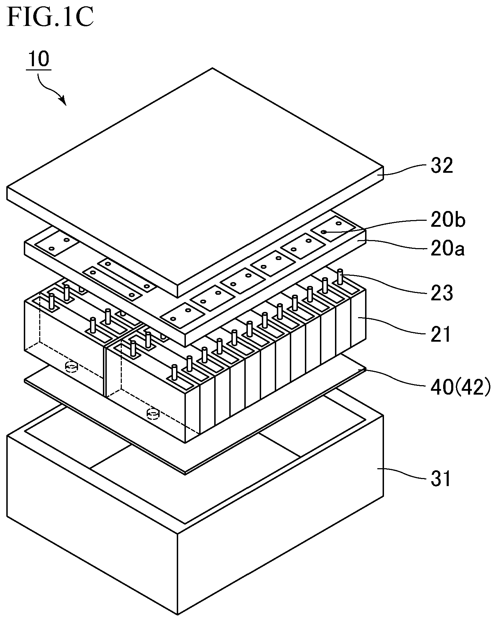

FIG. 1C is an exploded view of the battery pack illustrated in FIG. 1A.

A battery pack 10 illustrated in FIG. 1A, FIG. 1B, and FIG. 1C includes a module 20 including a plurality of battery cells 21, and a case 30 housing the module 20.

As illustrated in FIG. 1B, in the battery pack 10, each battery cell 21 is provided with a safety valve 22.

As illustrated in FIG. 1B, the case 30 includes a housing member 31 including a bottom portion 31b and a side wall portion 31s, and a lid member 32 covering the housing member 31. The module 20 is housed in the housing member 31.

Furthermore, in the battery pack 10, a heat insulating material 40 is provided between the module 20 and the case 30.

The battery cell 21 stores electric power, and is preferably, for example, a rechargeable secondary battery. Examples of secondary batteries include lithium-ion batteries, nickel-metal hydride batteries, and sodium-ion batteries.

The battery cell 21 illustrated in FIG. 1B and FIG. 1C has a rectangular parallelepiped shape. In the battery pack of the present invention, the battery cells may have a three-dimensional shape other than the rectangular parallelepiped shape (for example, a cubic shape or a modified shape).

As illustrated in FIG. 1B and FIG. 1C, in the module 20, the plurality of battery cells 21 are arranged in a row and fixed by a connection module member 20a.

Furthermore, as illustrated in FIG. 1C, each battery cell 21 has a terminal 23. Adjacent battery cells 21 are electrically connected by busbars 20b, which are provided on the connection module member 20a and connect the terminals 23.

The busbars 20b are flat plate-shaped members that are made of metal and are conductive. Examples of materials for the busbars 20b include copper, copper alloys, stainless steel (SUS), and aluminum.

The busbars 20b may be fixed to the terminals 23 by any fixing means (for example, screwing, welding).

Examples of materials for the case 30 include steel and aluminum. The steel is preferably stainless steel (SUS).

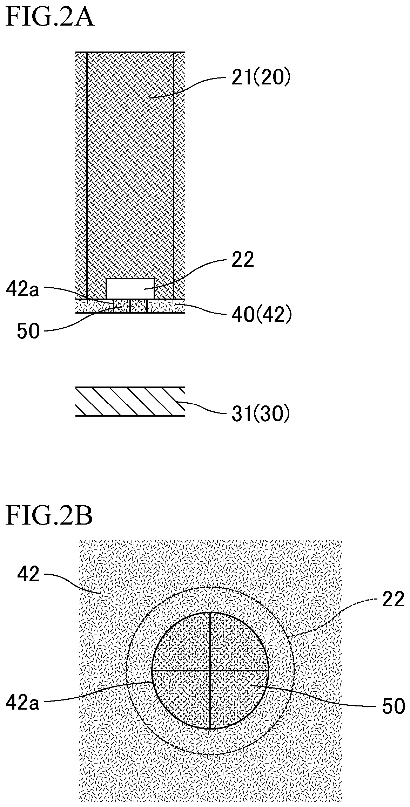

FIG. 2A is a schematic cross-sectional view of an example of one safety valve and a vicinity thereof in the battery pack according to the first embodiment of the present invention.

FIG. 2B is a plan view of the safety valve illustrated in FIG. 2A as viewed from the heat insulating material side.

As illustrated in FIG. 2A, the heat insulating material 40 includes a mica sheet 42 serving as the first heat insulating sheet.

The mica sheet 42 includes an opening 42a extending through the mica sheet 42. As illustrated in FIG. 2B, the opening 42a is provided, inside the opening, with four mica pieces 50 serving as the covering pieces.

The mica pieces 50 are bonded to the mica sheet 42 by an adhesive (not shown). In other words, the mica pieces 50 are bonded to the inner wall of the opening 42a.

In addition, as illustrated in FIG. 2B, one opening 42a is positioned to overlap one safety valve 22 in a transparent plan view of the mica sheet 42.

Furthermore, as illustrated in FIG. 2B, the opening 42a is circular. Moreover, the four mica pieces 50 have identical fan shapes and form a circle when combined.

The four mica pieces 50 are in exact contact with the outline of the opening 42a and are also in contact with one another to form a circle.

The mica pieces 50 may be bonded to one another by an adhesive at contact portions.

In the battery pack 10, a chain of thermal runaway due to high-temperature gas generated during thermal runaway from an abnormal battery cell can be prevented. The principle thereof will be described below.

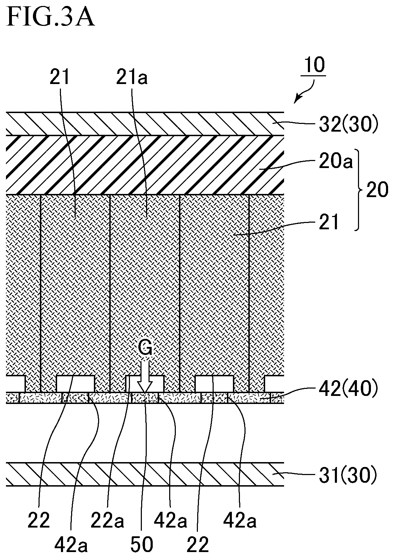

FIGS. 3A to 3C are explanatory views sequentially illustrating a principle by which a chain of thermal runaway is prevented when one battery cell undergoes thermal runaway in the battery pack according to the first embodiment of the present invention.

As illustrated in FIG. 3A, when one battery cell 21a undergoes thermal runaway and high-temperature gas is generated from the battery cell 21a, gas G (in FIG. 3A, the gas is denoted by reference sign "G", with the gas flow direction indicated by an arrow) is discharged via a safety valve 22a.

Then, the gas discharged via the safety valve 22a reaches the heat insulating material 40 (mica sheet 42).

The mica sheet 42 includes the openings 42a extending through the mica sheet 42. An opening 42a overlaps a safety valve 22 in a transparent plan view of the mica sheet 42.

Therefore, the gas G discharged via the safety valve 22a reaches a vicinity of the opening 42a in the mica sheet 42.

Each opening 42a in the mica sheet 42 is provided, inside the opening, with mica pieces 50, and the mica pieces 50 are bonded to the mica sheet 42 by an adhesive (not shown).

The gas G reaching the vicinity of the opening 42a in the mica sheet 42 is at a high temperature and therefore thermally decomposes the adhesive bonding the mica pieces 50, thereby weakening the bonding between the mica pieces 50 and the mica sheet 42.

Furthermore, gas pressure is applied to the mica pieces 50 from the module 20 side toward the case 30 side.

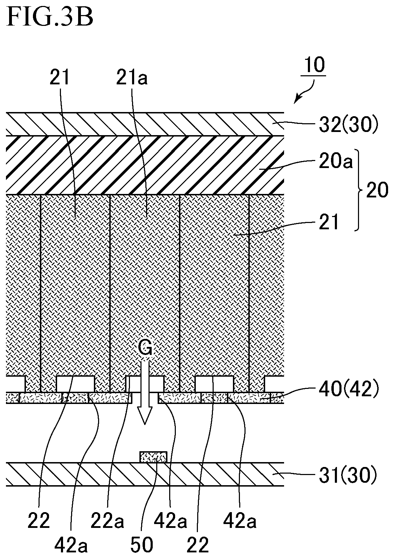

As a result, as illustrated in FIG. 3B, the mica pieces 50 are peeled off from the mica sheet 42.

In the battery pack 10, the mica pieces 50 are separate members bonded to the mica sheet 42 by an adhesive. In other words, the mica pieces 50 do not have a shape in which part thereof is continuous with the mica sheet 42. Therefore, thermal decomposition of the adhesive reliably causes the mica pieces 50 to be peeled off from the mica sheet 42.

Then, the gas G passes through the opening 42a in the mica sheet 42 and is discharged into a space between the heat insulating material 40 and the case 30.

In this process, the gas G decreases in temperature, and the gas pressure also decreases. Therefore, even when the gas G discharged through the opening 42a comes into contact with the case 30, the case 30 is less likely to undergo a temperature increase due to the gas G and is less likely to be damaged.

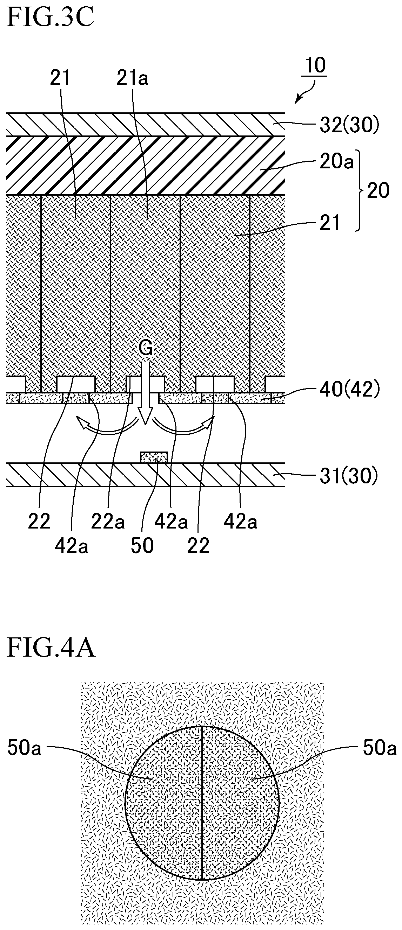

Furthermore, as illustrated in FIG. 3C, the gas G discharged through the opening 42a in the mica sheet 42 is diffused between the mica sheet 42 and the case 30 and also reaches other openings 42a in the mica sheet 42.

However, since the other openings 42a in the mica sheet 42 are provided, inside the openings, with the mica pieces 50, even when the gas G reaches the other openings 42a in the mica sheet 42, the gas can be prevented from flowing backward to the module 20 side through the other openings 42a in the mica sheet 42.

By such a principle, in the battery pack 10, the high-temperature gas G generated during thermal runaway from an abnormal battery cell 21a can be prevented from reaching other battery cells 21. Accordingly, a chain of thermal runaway can be prevented.

Preferable aspects of the heat insulating material of the battery pack according to the first embodiment of the present invention will be described below.

### (Mica sheet)

The mica sheet 42 preferably has a thickness of 0.05 to 2.0 mm, more preferably 0.1 to 1.0 mm, still more preferably 0.1 to 0.5 mm.

The mica sheet having a thickness of less than 0.05 mm exhibits reduced strength and is prone to damage.

The mica sheet having a thickness exceeding 2.0 mm is excessively thick, making it difficult to reduce the overall size of the battery pack.

In FIG. 2B, the opening 42a formed in the mica sheet 42 has a circular plan view shape. However, in the battery pack according to the first embodiment of the present invention, the openings formed in the mica sheet may have plan view shapes such as a triangle, a quadrangle, a hexagon, an ellipse, a racetrack, or the like.

Openings having such shapes can be easily formed.

The opening 42a preferably has a plan view shape with an area of 1.0 to 18 cm², more preferably 3 to 12 cm².

The opening having a plan view shape with an area of less than 1.0 cm² tends not to allow gas to pass therethrough.

The opening having a plan view shape with an area exceeding 18 cm² tends to be larger than a region of the mica sheet reached by the gas. As will be described in detail later, a mica piece provided inside an opening is peeled off from the mica sheet when the gas reaches the mica piece; therefore, a mica piece provided in a region not reached by the gas tends not to be peeled off.

In the battery pack 10, each of the openings may be positioned to overlap at least part of a corresponding one of the safety valves in a transparent plan view of the mica sheet 42. Preferably, each of the openings is positioned within the outline of one safety valve.

When the openings are positioned in this manner, gas discharged via a safety valve can more easily reach the opening.

### (Mica pieces)

In the heat insulating material 40 illustrated in FIG. 2B, the mica pieces 50 are in contact with one another, and each mica piece 50 is in exact contact with the outline of the opening 42a.

In other words, the opening 42a is covered by the mica pieces 50 without a gap.

Therefore, in the battery pack 10, backflow of the high-temperature gas G from the case 30 side can be prevented.

In the heat insulating material 40 illustrated in FIG. 2B, four mica pieces 50 are provided inside an opening 42a.

When the mica pieces 50 are provided inside the opening 42a so that no gap is formed between the opening 42a and the mica pieces 50, the provision of a plurality of mica pieces results in a smaller size of each mica piece than when providing a monolithic (integrated) mica piece.

When a monolithic (integrated) mica piece is provided in the opening 42a and is peeled off by the gas G from the module 20 side, the monolithic (integrated) mica piece, which is large, may block the flow of the gas G and inhibit diffusion of the gas.

On the other hand, when a plurality of mica pieces 50 are provided in the opening 42a and are peeled off by the gas G from the module 20 side, each mica piece 50, which is small, is less likely to inhibit diffusion of the gas G.

As described above, in the heat insulating material 40 illustrated in FIG. 2B, the mica pieces 50 are provided in an opening 42a without a gap.

However, in the battery pack according to the first embodiment of the present invention, a gap may be present between one opening and a mica piece provided inside the opening, and a gap may also be present between the mica pieces.

Furthermore, in the battery pack according to the first embodiment of the present invention, a monolithic (integrated) mica piece may be provided in an opening.

In such a configuration, the number of mica pieces to be provided in the entire battery pack is reduced, thereby enabling efficient production of the battery pack.

Next, the shapes of mica pieces when a plurality of mica pieces are provided inside an opening will be described below.

FIG. 4A to FIG. 4F are schematic plan views of examples of other shapes of mica pieces in the battery pack according to the first embodiment of the present invention.

As illustrated in FIG. 4A, the mica pieces in the battery pack according to the first embodiment of the present invention may include two mica pieces 50a.

The two mica pieces 50a are semicircular and form a circle when combined.

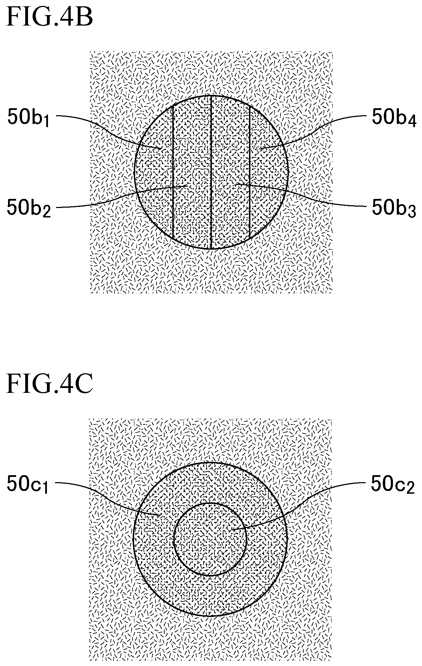

As illustrated in FIG. 4B, the mica pieces in the battery pack according to the first embodiment of the present invention may include four mica pieces 50b₁, 50b₂, 50b₃, and 50b₄.

The mica pieces 50b₁, 50b₂, 50b₃, and 50b₄ are shaped to form a circle when arranged in order from the left. In other words, the mica pieces 50b₁, 50b₂, 50b₃, and 50b₄ have shapes obtained by dividing a circle into four parts by straight lines equally spaced in a direction perpendicular to a horizontal direction.

As illustrated in FIG. 4C, the mica pieces in the battery pack according to the first embodiment of the present invention may include two mica pieces 50c₁ and 50c₂.

The mica piece 50c₁ is annular, and the mica piece 50c₂ is circular and positioned inside the mica piece 50c₁.

In this case, a portion where the mica piece 50c₁ and the mica piece 50c₂ are in contact with each other is bonded using an adhesive, so that the mica piece 50c₂ can be held without falling off.

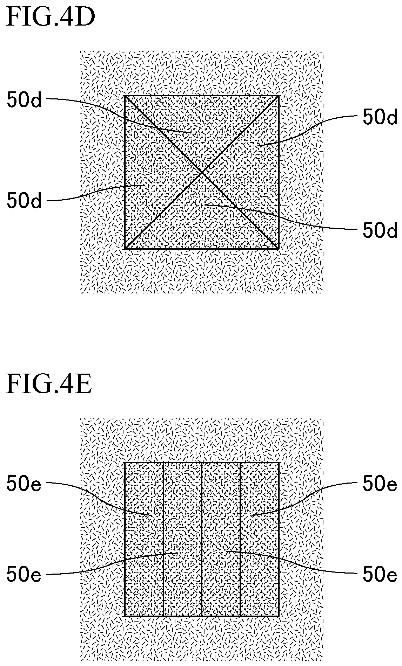

As illustrated in FIG. 4D, the mica pieces in the battery pack according to the first embodiment of the present invention may include four mica pieces 50d.

The mica pieces 50d are right isosceles triangles and form a square when combined.

As illustrated in FIG. 4E, the mica pieces in the battery pack according to the first embodiment of the present invention may include four mica pieces 50e.

The mica pieces 50e are identical rectangles and form a square when arranged in order from the left.

In other words, each mica piece 50e has a shape obtained by dividing a square into four equal parts by straight lines perpendicular to a horizontal direction.

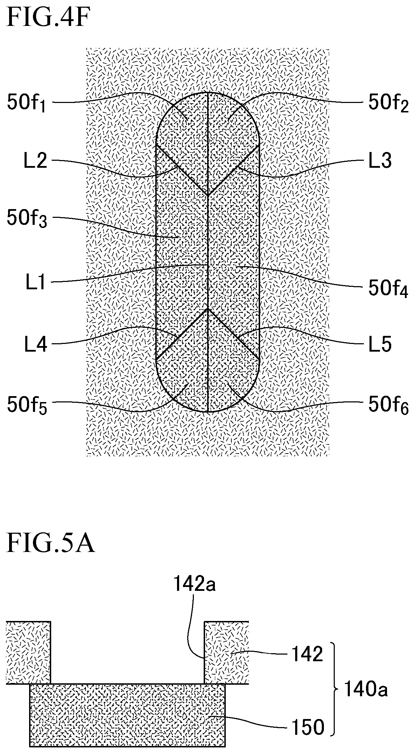

As illustrated in FIG. 4F, the mica pieces in the battery pack according to the first embodiment of the present invention may include six mica pieces 50f₁, 50f₂, 50f₃, 50f₄, 50f₅, and 50f₆.

The mica pieces are shaped to form a racetrack shape when combined.

Specifically, the mica pieces are shaped by cutting one racetrack-shaped mica piece along a line segment L1 extending along a major axis, and four line segments L2, L3, L4, and L5 that are in contact with the line segment L1.

The point at which the line segment L1 is in contact with the line segment L2 coincides with the point at which the line segment L1 is in contact with the line segment L3. The angle formed by the line segment L1 and the line segment L2 is equal to the angle formed by the line segment L1 and the line segment L3.

Furthermore, the point at which the line segment L1 is in contact with the line segment L4 coincides with the point at which the line segment L1 is in contact with the line segment L5. The angle formed by the line segment L1 and the line segment L4 is equal to the angle formed by the line segment L1 and the line segment L5.

In the heat insulating material 40, the mica pieces 50 are bonded to the mica sheet 42 by an adhesive (not shown).

The adhesive preferably includes a material that is thermally decomposed when gas reaches the material.

When the adhesive includes such a material, the mica pieces 50 are more easily peeled off when gas reaches the mica pieces 50.

The material that is thermally decomposed when gas reaches the material may be, for example, an organic material having a thermal decomposition temperature of 80°C or higher, specifically a polyamide-based organic material.

When the adhesive includes a polyamide-based organic material, the adhesive is more likely to be thermally decomposed when high-temperature gas G from an abnormal battery cell reaches the mica pieces 50.

Accordingly, the mica pieces 50 are more easily peeled off from the mica sheet 42.

In the battery pack 10, the mica sheet 42, which serves as the first heat insulating sheet, and the mica pieces 50, which serve as the covering pieces, are made of the same material, namely mica. As will be described in detail later, such a mica sheet 42 and mica pieces 50 can be simultaneously produced by punching a monolithic mica sheet so as to form openings.

In the battery pack of the present invention, the covering pieces may be made of the same material as or a different material from the first heat insulating sheet.

A method for producing the heat insulating material included in the battery pack according to the first embodiment of the present invention will be described.

To produce the heat insulating material, a single mica sheet is prepared.

Next, the mica sheet is punched to form a mica sheet having openings and to produce mica pieces.

Next, the mica pieces are bonded to the mica sheet (the inner wall of an opening) using an adhesive so that the produced mica pieces fit inside the formed openings.

Accordingly, the heat insulating material to be provided in the battery pack of the present invention can be produced.

When a plurality of mica pieces are provided, the mica pieces may be divided by cutting with a cutter or the like before being bonded.

Alternatively, a plurality of mica pieces may be formed by previously forming cuts in the mica sheet and punching the mica sheet to form segments including the cuts.

In this case, the cuts formed in the mica sheet may intersect the outlines of segments to be punched out when the mica sheet is punched.

In this case, the cuts remain in the mica sheet. In other words, the mica sheet has a shape in which the cuts are in contact with the outlines of the openings.

Furthermore, mica pieces other than the mica pieces formed by punching may be provided inside the openings.

Next, uses and an arrangement method of the battery pack according to the first embodiment of the present invention will be described.

The use of the battery pack according to the first embodiment of the present invention is not limited. For example, the battery pack may be used as a power source for an electric vehicle.

Furthermore, in the battery pack according to the first embodiment of the present invention, the safety valves in the battery cells are preferably positioned on the upper side in the vertical direction or on the lower side in the vertical direction.

In the battery pack arranged such that the safety valves are positioned in this manner, high-temperature gas from an abnormal battery cell is naturally and rapidly diffused, so that a chain of thermal runaway is less likely to occur. In other words, from a fail-safe viewpoint, such an arrangement is regarded as a preferable arrangement of the battery pack.

In the battery pack according to the first embodiment of the present invention, the safety valves may be positioned on the bottom portion side or the lid member side.

As described above, from a fail-safe viewpoint, the battery pack according to the first embodiment of the present invention may be arranged such that the safety valves are positioned on the upper side in the vertical direction or on the lower side in the vertical direction.

Since the battery pack is often arranged such that the bottom portion or the lid member of the case is positioned on the lower side, positioning the safety valves on the bottom portion side or the lid member side facilitates positioning the safety valves on the upper side in the vertical direction or on the lower side in the vertical direction.

### (Second embodiment)

Next, a battery pack according to a second embodiment of the present invention will be described.

The battery pack according to the second embodiment of the present invention differs from the battery pack according to the first embodiment of the present invention in that one or more mica pieces are arranged to cover the outlines of the openings from the case side.

The battery pack according to the second embodiment of the present invention will be described in detail below with reference to the drawings.

FIG. 5A is an enlarged schematic cross-sectional view of an example of a cross-section of a heat insulating material provided in the battery pack according to the second embodiment of the present invention.

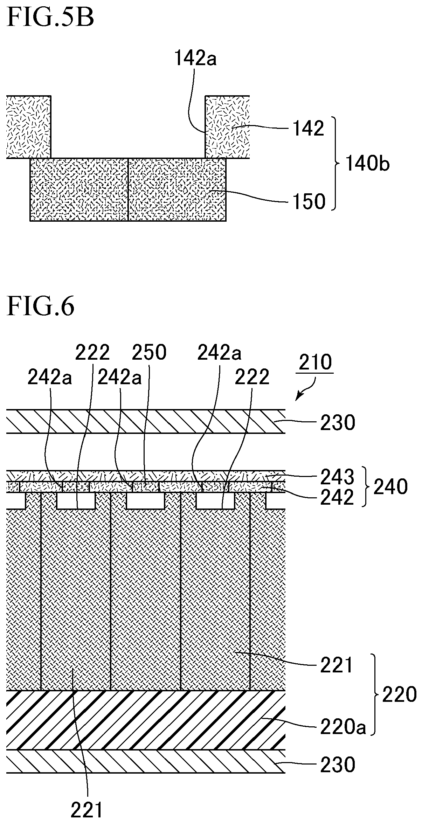

FIG. 5B is an enlarged schematic cross-sectional view of another example of a cross-section of a heat insulating material provided in the battery pack according to the second embodiment of the present invention.

A heat insulating material 140a illustrated in FIG. 5A includes a mica sheet 142 and a mica piece 150.

An opening 142a is formed in the mica sheet 142. The mica piece 150 covers the outline of the opening 142a from the case side (not shown).

The mica piece 150 is bonded to the surface of the mica sheet 142 by an adhesive (not shown).

A heat insulating material 140b illustrated in FIG. 5B differs from the heat insulating material 140a in that it includes a plurality of mica pieces 150.

Such a provision of the mica pieces prevents formation of a gap between the mica pieces and the opening, thereby facilitating prevention of backflow of gas between the mica pieces and the opening.

Except for the above differences, preferable materials and the like of each component of the battery pack according to the second embodiment of the present invention are the same as those described for the battery pack according to the first embodiment of the present invention.

### (Third embodiment)

Next, a battery pack according to a third embodiment of the present invention will be described.

The battery pack according to the third embodiment of the present invention differs from the battery pack according to the first embodiment of the present invention in that the heat insulating material further includes a second heat insulating sheet, and the second heat insulating sheet is laminated on the mica sheet to cover the openings from the case side.

The battery pack according to the third embodiment of the present invention will be described in detail below with reference to the drawings.

FIG. 6 is an enlarged schematic cross-sectional view of an example of the battery pack according to the third embodiment of the present invention.

A battery pack 210 illustrated in FIG. 6 includes a module 220 including a plurality of battery cells 221 and a connection module member 220a that connects the battery cells 221, and a case 230 housing the module 220.

In the battery pack 210, each battery cell 221 is provided with a safety valve 222.

Furthermore, the battery pack 210 includes a heat insulating material 240 between the module 220 and the case 230.

The battery pack 210 is arranged such that the safety valves 222 are positioned on the upper side in the vertical direction. In other words, the battery pack 210 is arranged upside down relative to the battery pack 10 illustrated in FIG. 1B.

The heat insulating material 240 includes a mica sheet 242 serving as the first heat insulating sheet and a second heat insulating sheet 243, which are laminated in this order from the lower side.

The mica sheet 242 is provided with openings 242a extending through the mica sheet 242. Each opening 242a is provided, inside the opening, with a mica piece 250.

The mica pieces 250 are bonded to the mica sheet 242 (the inner walls of the openings 242a) by an adhesive (not shown).

Furthermore, the second heat insulating sheet 243 is laminated on the mica sheet 242 to cover the openings 242a from the case 230 side.

Next, the function of the second heat insulating sheet 243 will be described with reference to the drawings.

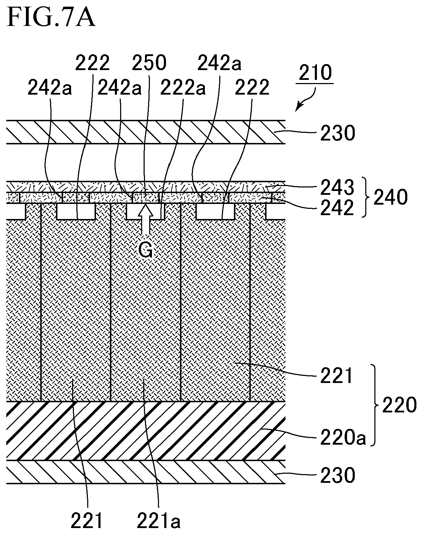

FIG. 7A to FIG. 7C are explanatory views sequentially illustrating a principle by which a chain of thermal runaway is prevented when one battery cell undergoes thermal runaway in the battery pack according to the third embodiment of the present invention.

As illustrated in FIG. 7A, when one battery cell 221a undergoes thermal runaway and high-temperature gas is generated from the battery cell 221a, gas G (in FIG. 7A, the gas is denoted by reference sign "G", with the gas flow direction indicated by an arrow) is discharged via a safety valve 222a.

Then, the gas discharged via the safety valve 222a reaches the heat insulating material 240.

The gas G that has reached the heat insulating material 240 reaches the mica sheet 242.

The mica sheet 242 includes the openings 242a extending through the mica sheet 242. Each opening 242a is positioned to overlap one of the safety valves 222 in a transparent plan view of the mica sheet 242.

Each opening 242a in the mica sheet 242 is provided, inside the opening, with a mica piece 250, and the mica piece 250 is bonded to the mica sheet 242 by an adhesive (not shown).

The gas G reaching the vicinity of the opening 242a in the mica sheet 242 is at a high temperature and thermally decomposes the adhesive bonding the mica piece 250, thereby weakening the bonding between the mica piece 250 and the mica sheet 242.

Furthermore, gas pressure is applied to the mica piece 250 from the module 220 side toward the case 230 side.

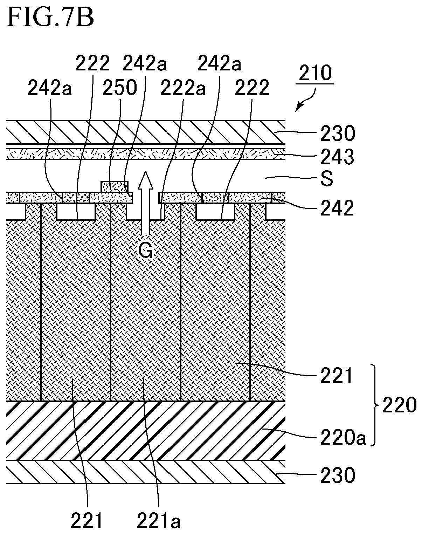

As a result, as illustrated in FIG. 7B, the mica piece 250 is peeled off from the mica sheet 242.

Then, the gas G passes through the opening 242a in the mica sheet 242 and reaches the second heat insulating sheet 243.

The gas G is blocked by the second heat insulating sheet 243. In addition, the second heat insulating sheet 243 is pushed upward by the gas G and thereby separated from the mica sheet 242.

As a result, contact between the gas G and the case 230 can be prevented.

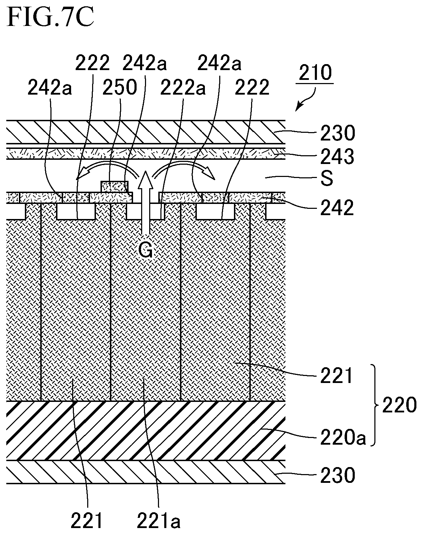

Thereafter, as illustrated in FIG. 7C, the gas G is diffused through a space S formed between the second heat insulating sheet 243 and the mica sheet 242. Then, the temperature and pressure of the gas G decrease.

The second heat insulating sheet 243 may be arranged in any manner as long as, as illustrated in FIG. 7C, the second heat insulating sheet 243 is pushed upward by the gas G and thereby separated from the mica sheet 242 to form the space S.

For example, the second heat insulating sheet 243 may be provided on the mica sheet 242 without being fixed, or may be provided on the mica sheet 242 with a part thereof being fixed.

The second heat insulating sheet 243 may be composed of a sheet member mainly containing magnesium silicate (containing magnesium silicate in an amount of about 75% by weight to 85% by weight), or a sheet member mainly containing silica.

### (Other embodiments)

In the battery pack according to the first embodiment of the present invention described above, one opening is positioned to overlap one safety valve in a transparent plan view of the mica sheet.

In the battery pack of the present invention, one opening may be positioned to overlap at least part of one safety valve with a portion of the opening not overlapping the safety valve in a transparent plan view of the mica sheet.

Furthermore, although one opening is positioned to overlap one safety valve in a transparent plan view of the mica sheet in the battery pack according to the first embodiment of the present invention described above, a plurality of openings may be positioned to overlap at least part of a single safety valve.

In the first to third embodiments of the present invention, cases where the first heat insulating sheet is a mica sheet and the covering pieces are mica pieces have been described. However, in the battery pack of the present invention, the first heat insulating sheet may be a heat-resistant resin sheet, and the covering pieces may be heat-resistant resin pieces.

Furthermore, the heat-resistant resin sheet and the heat-resistant resin pieces may be composed of polyamide resin, polybutylene terephthalate resin, or polypropylene resin.

The following matters are disclosed herein.

The present disclosure (1) relates to a battery pack including: a module including a plurality of battery cells each provided with a safety valve; a case housing the module; and a heat insulating material provided between the module and the case, wherein the heat insulating material includes a first heat insulating sheet, the first heat insulating sheet includes a plurality of openings extending through the first heat insulating sheet, each of the plurality of openings is provided with one or more covering pieces that cover at least part of the opening, the one or more covering pieces are bonded to the first heat insulating sheet by an adhesive, and each of the openings is positioned to overlap at least part of a corresponding one of the safety valves in a transparent plan view of the first heat insulating sheet.

The present disclosure (2) relates to the battery pack according to the present disclosure (1), wherein each of the plurality of openings is provided, inside the opening, with at least one covering piece.

The present disclosure (3) relates to the battery pack according to the present disclosure (2), wherein each of the plurality of openings is provided, inside the opening, with a plurality of covering pieces.

The present disclosure (4) relates to the battery pack according to the present disclosure (3), wherein at least some of the plurality of covering pieces are arranged to be in contact with each other, and the plurality of covering pieces are bonded to one another by an adhesive.

The present disclosure (5) relates to the battery pack according to the present disclosure (4), wherein in a plan view of the heat insulating material from the first heat insulating sheet side, a portion where the covering pieces are in contact with each other is formed in a straight-line shape.

The present disclosure (6) relates to the battery pack according to any one of the present disclosures (1) to (5), wherein at least part of the covering pieces is arranged to be in contact with an outline of the opening.

The present disclosure (7) relates to the battery pack according to any one of the present disclosures (1) to (5), wherein the covering pieces are arranged to cover the opening from the case side.

The present disclosure (8) relates to the battery pack according to any one of the present disclosures (1) to (7), wherein the openings have plan view shapes of at least one type selected from the group consisting of a triangle, a quadrangle, a hexagon, a circle, an ellipse, and a racetrack.

The present disclosure (9) relates to the battery pack according to any one of the present disclosures (1) to (8), wherein the first heat insulating sheet is a mica sheet.

The present disclosure (10) relates to the battery pack according to any one of the present disclosures (1) to (8), wherein the first heat insulating sheet is a heat-resistant resin sheet.

The present disclosure (11) relates to the battery pack according to any one of the present disclosures (1) to (10), wherein the covering pieces are made of the same material as the first heat insulating sheet.

The present disclosure (12) relates to the battery pack according to any one of the present disclosures (1) to (11), wherein the adhesive includes an organic adhesive.

The present disclosure (13) relates to the battery pack according to any one of the present disclosures (1) to (12), wherein the heat insulating material further includes a second heat insulating sheet, and the second heat insulating sheet is laminated on the first heat insulating sheet to cover the openings from the case side.

The present disclosure (14) relates to the battery pack according to any one of the present disclosures (1) to (13), wherein the case includes a housing member including a bottom portion and a side wall portion, and a lid member covering the housing member, and the safety valves are positioned on the bottom portion side or the lid member side.

### REFERENCE SIGNS LIST

10, 210 battery pack
20, 220 module
20a, 220a connection module member
20b busbar
21, 21a, 221, 221a battery cell
22, 22a, 222, 222a safety valve
23 terminal
30, 230 case
31 housing member
31b bottom portion
31s side wall portion
32 lid member
40, 140a, 140b, 240 heat insulating material
42, 142, 242 mica sheet
42a, 142a, 242a opening
50, 50a, 50b₁, 50b₂, 50b₃, 50b₄, 50c₁, 50c₂, 50d, 50e, 50f₁, 50f₂, 50f₃, 50f₄, 50f₅, 50f₆,
150, 250 mica piece
243 second heat insulating sheet

## Claims

1. A battery pack comprising:
a module including a plurality of battery cells each provided with a safety valve;
a case housing the module; and
a heat insulating material provided between the module and the case,
wherein the heat insulating material includes a first heat insulating sheet,
the first heat insulating sheet includes a plurality of openings extending through the first heat insulating sheet,
each of the plurality of openings is provided with one or more covering pieces that cover at least part of the opening,
the one or more covering pieces are bonded to the first heat insulating sheet by an adhesive, and
each of the openings is positioned to overlap at least part of a corresponding one of the safety valves in a transparent plan view of the first heat insulating sheet.

2. The battery pack according to claim 1,
wherein each of the plurality of openings is provided, inside the opening, with at least one covering piece.

3. The battery pack according to claim 2,
wherein each of the plurality of openings is provided, inside the opening, with a plurality of covering pieces.

4. The battery pack according to claim 3,
wherein at least some of the plurality of covering pieces are arranged to be in contact with each other, and
the plurality of covering pieces are bonded to one another by an adhesive.

5. The battery pack according to claim 4,
wherein in a plan view of the heat insulating material from the first heat insulating sheet side, a portion where the covering pieces are in contact with each other is formed in a straight-line shape.

6. The battery pack according to any one of claims 1 to 5,
wherein at least part of the covering pieces is arranged to be in contact with an outline of the opening.

7. The battery pack according to any one of claims 1 to 5,
wherein the covering pieces are arranged to cover the opening from the case side.

8. The battery pack according to any one of claims 1 to 7,
wherein the openings have plan view shapes of at least one type selected from the group consisting of a triangle, a quadrangle, a hexagon, a circle, an ellipse, and a racetrack.

9. The battery pack according to any one of claims 1 to 8,
wherein the first heat insulating sheet is a mica sheet.

10. The battery pack according to any one of claims 1 to 8,
wherein the first heat insulating sheet is a heat-resistant resin sheet.

11. The battery pack according to any one of claims 1 to 10,
wherein the covering pieces are made of the same material as the first heat insulating sheet.

12. The battery pack according to any one of claims 1 to 11,
wherein the adhesive includes an organic adhesive.

13. The battery pack according to any one of claims 1 to 12,
wherein the heat insulating material further includes a second heat insulating sheet, and
the second heat insulating sheet is laminated on the first heat insulating sheet to cover the openings from the case side.

14. The battery pack according to any one of claims 1 to 13,
wherein the case includes a housing member including a bottom portion and a side wall portion, and a lid member covering the housing member, and
the safety valves are positioned on the bottom portion side or the lid member side.
